# EUROPEAN PATENT APPLICATION

(11) **EP 4 729 187 A1**
(43) Date of publication of application: **22.04.2026**
(21) Application number: 24850436.7
(22) Date of filing: 08.01.2024
(51) Int. Cl.: B05C 11/00, H01M 4/04, B05C 9/12, G01B 21/02, G01B 21/08, G01G 19/62

(54) **ELECTRODE SHEET INSPECTION CONTROL SYSTEM**

(30) Priority: 07.08.2023 CN 202310984354
(71) Applicant: Contemporary Amperex Technology Co., Limited, Ningde, Fujian 352100 (CN)
(72) Inventor: DENG, Zhikai, Ningde, Fujian 352100 (CN); LU, Lei, Ningde, Fujian 352100 (CN); YU, Linzhen, Ningde, Fujian 352100 (CN); WANG, Shaoteng, Ningde, Fujian 352100 (CN); ZHENG, Tuo, Ningde, Fujian 352100 (CN); LI, Shisong, Ningde, Fujian 352100 (CN)
(74) Representative: Ran, Handong
(86) International application number: PCT/CN2024/071016
(87) International publication number: WO 2025/030776

(57) **Abstract**

An electrode sheet inspection control system (100). The electrode sheet inspection control system (100) is applied to an electrode sheet coating system. The electrode sheet coating system comprises an unwinding device (101), a first surface coating device (102), a first surface drying device (103) and a winding device (104) arranged in sequence. The electrode sheet inspection control system (100) comprises a first measurement device (105); the first measurement device (105) is arranged between the unwinding device (101) and the first surface coating device (102), and the first measurement device (105) is used for measuring the size of an area to be coated on a first surface of an electrode sheet substrate output by the unwinding device (101), the first surface being perpendicular to the thickness direction of the electrode sheet substrate.

## Description

### CROSS-REFERENCE TO RELATED APPLICATION

The present application claims priority to Chinese Patent Application No. 202310984354.3 filed on 7 August 2023 and titled "SYSTEM FOR CONTROLLING ELECTRODE PLATE DETECTION", the entire content of which is incorporated herein by reference.

### TECHNICAL FIELD

Embodiments of the present application relate to the technical field of batteries, and particularly relate to a system for controlling electrode plate detection.

### BACKGROUND

With the increasingly aggravated environmental pollution, the new energy industry has attracted more and more attention. In the new energy industry, the battery technology is an important factor regarding the development thereof. Various design factors, such as energy density, cycle life, and yield rate, need to be considered for the development of the battery technology.

The design of an electrode plate in a battery cell is crucial to the yield rate and service performance of the battery cell. Therefore, how to improve the yield rate of the electrode plate has become a technical problem to be urgently solved in the art.

### SUMMARY OF THE INVENTION

Embodiments of the present application provide a system for controlling electrode plate detection, and can improve the yield rate of an electrode plate.

In a first aspect, a system for controlling electrode plate detection is provided, the system for controlling electrode plate detection is applied to an electrode plate coating system, and the electrode plate coating system comprises an unwinding apparatus, a first surface coating apparatus, a first surface drying apparatus, and a winding apparatus arranged in sequence, wherein the system for controlling electrode plate detection comprises: a first detection apparatus arranged between the unwinding apparatus and the first surface coating apparatus for detecting dimension of a to-be-coated region on a first surface of an electrode plate base material outputted from the unwinding apparatus, the first surface being perpendicular to thickness direction of the electrode plate base material.

In an embodiment of the present application, the system for controlling electrode plate detection is provided with the first detection apparatus configured to detect the dimension of the to-be-coated region on the first surface of the electrode plate base material outputted from the unwinding apparatus, the first surface is perpendicular to the thickness direction of the electrode plate base material, and the first detection apparatus is arranged between the unwinding apparatus and the first surface coating apparatus. The system for controlling electrode plate detection can adjust the dimension of the electrode plate base material or the coating film in the first surface coating apparatus corresponding to the to-be-coated region on the first surface of the electrode plate base material based on a detection result of the first detection apparatus in a timely manner, thereby reducing the risk of electrode plate scrapping caused by untimely detection, improving the coating dimension consistency of the electrode plate, improving the yield rate and quality of the electrode plate, and improving the manufacturing efficiency of the electrode plate.

In some implementations, the system for controlling electrode plate detection further comprises: a first cutting apparatus arranged between the first detection apparatus and the first surface coating apparatus for adjusting dimension of a coating film in the first surface coating apparatus corresponding to the to-be-coated region on the first surface of the electrode plate base material based on the detection result of the first detection apparatus.

In an embodiment of the present application, the system for controlling electrode plate detection is provided with the first cutting apparatus configured to detect the dimension of the coating film in the first surface coating apparatus corresponding to the to-be-coated region on the first surface of the electrode plate base material based on the detection result of the first detection apparatus, and the first cutting apparatus is arranged between the first detection apparatus and the first surface coating apparatus. The first cutting apparatus can adjust the dimension of the coating film in the first surface coating apparatus corresponding to the to-be-coated region on the first surface of the electrode plate base material based on the detection result of the first detection apparatus in a timely manner, thereby reducing the risk of electrode plate scrapping caused by untimely detection, improving the coating dimension consistency of the electrode plate, improving the yield rate and quality of the electrode plate, and improving the manufacturing efficiency of the electrode plate.

In some implementations, the system for controlling electrode plate detection further comprises: a second detection apparatus arranged between the first surface coating apparatus and the first surface drying apparatus for detecting dimension of a coated region on a first surface of a first electrode plate outputted from the first surface coating apparatus.

In an embodiment of the present application, the system for controlling electrode plate detection is provided with the second detection apparatus configured to detect the dimension of the coated region on the first surface of the first electrode plate outputted from the first surface coating apparatus, and the second detection apparatus is arranged between the first surface coating apparatus and the first surface drying apparatus. The system for controlling electrode plate detection can adjust position of the electrode plate base material outputted from the unwinding apparatus based on a detection result of the second detection apparatus in a timely manner, thereby reducing the risk of electrode plate scrapping caused by untimely detection, improving the coating dimension consistency of the electrode plate, improving the yield rate and quality of the electrode plate, and improving the manufacturing efficiency of the electrode plate.

In some implementations, the system for controlling electrode plate detection further comprises: a first deviation correction apparatus arranged between the unwinding apparatus and the first surface coating apparatus for adjusting the position of the electrode plate base material outputted from the unwinding apparatus based on the detection result of the second detection apparatus.

In an embodiment of the present application, the system for controlling electrode plate detection is provided with the first deviation correction apparatus configured to detect the position of the electrode plate base material outputted from the unwinding apparatus based on the detection result of the second detection apparatus, and the first deviation correction apparatus is arranged between the unwinding apparatus and the first surface coating apparatus. The first deviation correction apparatus can adjust the position of the electrode plate base material outputted from the unwinding apparatus based on the detection result of the second detection apparatus in a timely manner, so that position of the coating film in the first surface coating apparatus corresponding to the to-be-coated region on the first surface of the electrode plate base material outputted from the unwinding apparatus matches position of the to-be-coated region on the first surface, thereby reducing the risk of electrode plate scrapping caused by untimely detection, further improving the coating dimension consistency of the electrode plate, improving the yield rate and quality of the electrode plate, and improving the manufacturing efficiency of the electrode plate.

In some implementations, the electrode plate coating system further comprises a second surface coating apparatus and a second surface drying apparatus arranged in sequence between the first surface drying apparatus and the winding apparatus, and the system for controlling electrode plate detection further comprises: a third detection apparatus arranged between the first surface drying apparatus and the second surface coating apparatus for detecting dimension of a to-be-coated region on a second surface of the first electrode plate outputted from the first surface drying apparatus, the second surface being perpendicular to thickness direction of the first electrode plate.

In an embodiment of the present application, the system for controlling electrode plate detection is provided with the third detection apparatus configured to detect the dimension of the to-be-coated region on the second surface of the first electrode plate outputted from the first surface drying apparatus, and the third detection apparatus is arranged between the first surface drying apparatus and the second surface coating apparatus. The system for controlling electrode plate detection can adjust the dimension of the to-be-coated region on the second surface of the first electrode plate outputted from the first surface drying apparatus and dimension of the coating film in the second surface coating apparatus corresponding to the to-be-coated region on the second surface of the first electrode plate outputted from the first surface drying apparatus based on a detection result of the third detection apparatus in a timely manner, thereby reducing the risk of electrode plate scrapping caused by untimely detection, improving the coating dimension consistency of the electrode plate, improving the yield rate and quality of the electrode plate, and improving the manufacturing efficiency of the electrode plate.

In some implementations, the system for controlling electrode plate detection further comprises: a second cutting apparatus arranged between the third detection apparatus and the second surface coating apparatus for adjusting dimension of a coating film in the second surface coating apparatus corresponding to the to-be-coated region on the second surface of the first electrode plate outputted from the first surface drying apparatus based on the detection result of the third detection apparatus.

In an embodiment of the present application, the system for controlling electrode plate detection is provided with the second cutting apparatus configured to detect the dimension of the coating film in the second surface coating apparatus corresponding to the to-be-coated region on the second surface of the first electrode plate outputted from the first surface drying apparatus based on the detection result of the third detection apparatus, and the second cutting apparatus is arranged between the third detection apparatus and the second surface coating apparatus. The second cutting apparatus can adjust the dimension of the coating film in the second surface coating apparatus corresponding to the to-be-coated region on the second surface of the first electrode plate based on the detection result of the third detection apparatus in a timely manner, thereby reducing the risk of electrode plate scrapping caused by untimely detection, improving the coating dimension consistency of the electrode plate, improving the yield rate and quality of the electrode plate, and improving the manufacturing efficiency of the electrode plate.

In some implementations, the electrode plate coating system further comprises the second surface coating apparatus and the second surface drying apparatus arranged in sequence between the first surface drying apparatus and the winding apparatus, and the system for controlling electrode plate detection further comprises: a fourth detection apparatus arranged between the second surface coating apparatus and the second surface drying apparatus for detecting dimension of a coated region on the second surface of the first electrode plate outputted from the second surface coating apparatus.

In an embodiment of the present application, the system for controlling electrode plate detection is provided with the fourth detection apparatus configured to detect the dimension of the coated region on the second surface of the first electrode plate outputted from the second surface coating apparatus, and the fourth detection apparatus is arranged between the second surface coating apparatus and the second surface drying apparatus. The system for controlling electrode plate detection can adjust position of the first electrode plate outputted from the first surface drying apparatus based on a detection result of the fourth detection apparatus in a timely manner, thereby reducing the risk of electrode plate scrapping caused by untimely detection, improving the coating dimension consistency of the electrode plate, improving the yield rate and quality of the electrode plate, and improving the manufacturing efficiency of the electrode plate.

In some implementations, the system for controlling electrode plate detection further comprises: a second deviation correction apparatus arranged between the first surface drying apparatus and the second surface coating apparatus for adjusting the position of the first electrode plate outputted from the first surface drying apparatus based on the detection result of the fourth detection apparatus.

In an embodiment of the present application, the system for controlling electrode plate detection is provided with the second deviation correction apparatus configured to detect the position of the first electrode plate outputted from the first surface drying apparatus based on the detection result of the fourth detection apparatus, and the second deviation correction apparatus is arranged between the first surface drying apparatus and the second surface coating apparatus. The second deviation correction apparatus can adjust the position of the first electrode plate outputted from the first surface drying apparatus based on the detection result of the fourth detection apparatus in a timely manner, so that position of the coating film in the first surface coating apparatus corresponding to the to-be-coated region on the second surface of the first electrode plate outputted from the first surface drying apparatus matches position of the to-be-coated region on the second surface, thereby reducing the risk of electrode plate scrapping caused by untimely detection, further improving the coating dimension consistency of the electrode plate, improving the yield rate and quality of the electrode plate, and improving the manufacturing efficiency of the electrode plate.

In some implementations, the system for controlling electrode plate detection further comprises: a fifth detection apparatus arranged between the first surface drying apparatus and the second surface coating apparatus for detecting the dimension of the coated region on the first surface of the first electrode plate outputted from the first surface drying apparatus; and the second deviation correction apparatus is further configured to adjust the position of the first electrode plate outputted from the first surface drying apparatus based on a detection result of the fifth detection apparatus and the detection result of the fourth detection apparatus.

In an embodiment of the present application, the system for controlling electrode plate detection is provided with the fifth detection apparatus configured to detect the dimension of the coated region on the first surface of the first electrode plate outputted from the first surface drying apparatus, and the fifth detection apparatus is arranged between the first surface drying apparatus and the second surface coating apparatus. The system for controlling electrode plate detection can adjust, via the second deviation correction apparatus, the position of the first electrode plate outputted from the first surface drying apparatus based on the detection result of the fifth detection apparatus and the detection result of the fourth detection apparatus, so that mislocated dimension of the coated regions on the first surface and the second surface of the first electrode plate outputted from the second surface coating apparatus can fall within a specification range, thereby reducing the risk of electrode plate scrapping caused by untimely detection, further improving the coating dimension consistency of the electrode plate, improving the yield rate and quality of the electrode plate, and improving the manufacturing efficiency of the electrode plate.

In some implementations, the system for controlling electrode plate detection further comprises: a sixth detection apparatus arranged between the first surface coating apparatus and the first surface drying apparatus for detecting weight and/or thickness of the first electrode plate outputted from the first surface coating apparatus; the first surface coating apparatus comprises at least two calender rollers, and the first surface coating apparatus is configured to adjust a distance between any two of the at least two calender rollers and a rolling pressure based on a detection result of the sixth detection apparatus.

In an embodiment of the present application, the system for controlling electrode plate detection is provided with the sixth detection apparatus configured to detect the weight and/or thickness of the first electrode plate outputted from the first surface coating apparatus, and the sixth detection apparatus is arranged between the first surface coating apparatus and the first surface drying apparatus. The system for controlling electrode plate detection can adjust the distance between any two of the at least two calender rollers in the first surface coating apparatus and the rolling pressure based on the detection result of the sixth detection apparatus, to improve weight consistency of the first electrode plate outputted from the first surface coating apparatus, thereby improving the yield rate and quality of the electrode plate, and improving the manufacturing efficiency of the electrode plate.

In some implementations, the system for controlling electrode plate detection further comprises: a seventh detection apparatus arranged between the second surface coating apparatus and the second surface drying apparatus for detecting weight and/or thickness of the first electrode plate outputted from the second surface coating apparatus; the second surface coating apparatus comprises at least two calender rollers, and the second surface coating apparatus is configured to adjust the distance between any two of the at least two calender rollers and the rolling pressure based on a detection result of the seventh detection apparatus.

In an embodiment of the present application, the system for controlling electrode plate detection is provided with the seventh detection apparatus configured to detect the weight and/or thickness of the first electrode plate outputted from the second surface coating apparatus, and the seventh detection apparatus is arranged between the second surface coating apparatus and the second surface drying apparatus. The system for controlling electrode plate detection can adjust the distance between any two of the at least two calender rollers in the second surface coating apparatus and the rolling pressure based on the detection result of the seventh detection apparatus, to improve weight consistency of the first electrode plate outputted from the second surface coating apparatus, thereby improving the yield rate and quality of the electrode plate, and improving the manufacturing efficiency of the electrode plate.

In some implementations, at least one support roller may be provided on one side or both sides of the at least two calender rollers in the first surface coating apparatus and/or the second surface coating apparatus, and axis of the at least one support roller and axes of the at least two calender rollers are on a same plane and parallel to each other.

In an embodiment of the present application, when the at least two calender rollers in the first surface coating apparatus and/or the second surface coating apparatus rotate, the at least one support roller can rotate following the at least two calender rollers, to serve for supporting the at least two calender rollers, and reduce the deformation of the calender rollers in the thickness direction of the electrode plate, thereby improving thickness consistency of the electrode plate, improving the yield rate and quality of the electrode plate, and improving the manufacturing efficiency of the electrode plate.

### BRIEF DESCRIPTION OF THE DRAWINGS

In order to explain technical solutions of embodiments of the present application more clearly, a brief introduction of drawings to be used for describing the embodiments of the present application will be made below. Apparently, the drawings described below are merely some embodiments of the present application, and other drawings can be obtained according to these drawings by those skilled in the art without creative labor.
FIG. 1 is a schematic structural diagram of a vehicle according to an embodiment of the present application.
FIG. 2 is a schematic structural diagram of a battery according to an embodiment of the present application.
FIG. 3 is a schematic structural diagram of a battery cell according to an embodiment of the present application.
FIG. 4 is a schematic flow block of a system for controlling electrode plate detection according to an embodiment of the present application.
FIG. 5 is a schematic flow block of another system for controlling electrode plate detection according to another embodiment of the present application.
FIG. 6 is a schematic flowchart of still another system for controlling electrode plate detection according to another embodiment of the present application.

In the drawings, the figures are not drawn to the actual scale.

### DETAILED DESCRIPTION

Implementations of the present application will be described in further detail below in conjunction with the embodiments with reference to the drawings. The following detailed description of the embodiments and the drawings are intended to exemplarily describe the principles of the embodiments of the present application, instead of limiting the scope of the embodiments of the present application, that is, the embodiments of the present application are not limited to the described embodiments.

Unless otherwise defined, all technical and scientific terms used in the embodiments of the present application have the same meaning as commonly understood by those skilled in the art belonging to the technical field of the embodiments of the present application; the terms used herein are intended only for the purpose of describing specific embodiments and are not intended to limit the embodiments of the present application; the terms "including" and "having" and any variations thereof in the specification and the claims of the present application and in the description of drawings above are intended to cover non-exclusive inclusion.

In the description of the embodiments of the present application, the technical terms "first", "second", and the like, are used only to distinguish between different objects and are not to be understood as indicating or implying a relative importance or implicitly specifying the number, particular order, or primary and secondary relationship of the technical features indicated. In the description of the embodiments of the present application, the meaning of "a plurality of" is two or more, unless otherwise explicitly and specifically defined.

The phrase "embodiment" referred to in the present application means that the descriptions of specific features, structures, and characteristics in combination with the embodiment are included in at least one embodiment of the present application. The appearance of this phrase in various places in the specification does not necessarily refer to the same embodiment, nor is it a separate or alternative embodiment that is mutually exclusive with other embodiments. It is understood explicitly and implicitly by those skilled in the art that the embodiments described in the present application can be combined with other embodiments.

In the description of the embodiment of the present application, the term "and/or" is merely an association that describes the associated object, indicating that there can be three kinds of relationships, such as A and/or B, which can be denoted as: the existence of A alone, the existence of A and B at the same time, and the existence of B alone. In addition, the character "/" herein generally means that the associated objects before and after it are in an "or" relationship.

It should be understood that in the description of the embodiments of the present application, the term "a plurality of" refers to more than two (including two). Similarly, "a plurality of groups" refers to more than two groups (including two groups), and "a plurality of plates" refers to more than two plates (including two plates).

In the description of the embodiments of the present application, orientation or positional relationships indicated by the technical terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", and the like are based on the orientation or positional relationships shown in the accompanying drawing, and are only for the convenience of describing the embodiments of the present application and simplifying the description, and do not indicate or imply that the apparatus or element referred to must have a specific orientation, be constructed and operated in a specific orientation, and therefore cannot be construed as a restriction on the embodiments of the present application.

In the description of the embodiments of the present application, unless otherwise expressly specified and limited, the technical terms "mount", "couple", "connect", "fix", etc., should be understood in a broad sense, such as, a fixed connection, a detachable connection, or an integral connection; or a mechanical connection, or an electrical connection; or a direct connection, an indirect connection through an intermediate medium, or an internal communication of two elements, or interaction between two elements. For those of ordinary skill in the art, the specific meaning of the above terms in the present application may be understood on a case-by-case basis.

The phrase "embodiment" referred to in the present application means that the descriptions of specific features, structures, and characteristics in combination with the embodiment are included in at least one embodiment of the present application. The appearance of this phrase in various places in the specification does not necessarily refer to the same embodiment, nor is it a separate or alternative embodiment that is mutually exclusive with other embodiments. It is understood explicitly and implicitly by those skilled in the art that the embodiments described in the present application can be combined with other embodiments.

In the embodiments of the present application, the battery refers to a physical module that includes one or more battery cells to supply electric energy. For example, the battery mentioned in the present application may include a battery module, a battery pack, or the like. The battery generally includes a box for encapsulating one or more battery cells. The box can reduce the impact of liquid or other foreign matters on the charging or discharging of the battery cells.

It should be understood that the battery cell in the embodiment of the present application includes, but is not limited to, a lithium-ion battery, a sodium-ion battery, a sodium/lithium-ion battery, a lithium metal battery, a sodium metal battery, a lithium-sulfur battery, a magnesium-ion battery, a nickel-hydrogen battery, a nickel-cadmium battery, a lead storage battery, and the like.

In some implementations, the battery cell in the embodiment of the present application may be a metal battery, and specifically, the metal battery may include a lithium metal secondary battery, a sodium metal battery, a magnesium metal battery, or the like.

In some implementations, the battery cell generally includes an electrode assembly. The electrode assembly comprises a positive electrode, a negative electrode, and a separator. During charging and discharging of the battery cell, active ions (such as lithium ions) are intercalated and deintercalated back and forth between the positive electrode and the negative electrode. The separator is arranged between the positive electrode and the negative electrode, and can function to prevent a short circuit between the positive electrode and the negative electrode while enabling the active ions to pass through.

In some implementations, the positive electrode may be a positive electrode plate, and the positive electrode plate may include a positive electrode current collector and a positive electrode active material arranged on at least one surface of the positive electrode current collector.

For example, the positive electrode current collector has two surfaces opposite to each other in the thickness direction thereof, and the positive electrode active material is arranged on either or both of the two opposite surfaces of the positive electrode current collector.

As an example, a metal foil or a composite current collector may be used as the positive electrode current collector. For example, silver surface-treated aluminum or stainless steel, stainless steel, copper, aluminum, nickel, carbon electrode, carbon, nickel, titanium, or the like may be used as the metal foil. The composite current collector may comprise a polymer material substrate layer and a metal layer. The composite current collector may be formed by forming a metal material (such as aluminum, aluminum alloy, nickel, nickel alloy, titanium, titanium alloy, silver, and silver alloy) on a high molecular material substrate (such as a substrate of polypropylene, polyethylene terephthalate, polybutylene terephthalate, polystyrene, or polyethylene).

As an example, the positive electrode active material may include at least one of the following materials: a lithium-containing phosphate, a lithium transition metal oxide, and a respective modified compound thereof. In some implementations, other conventional materials that may be used as positive electrode active materials for batteries may also be used. These positive electrode active materials may be used alone or in combination of two or more thereof. Examples of the lithium-containing phosphate may include, but are not limited to, at least one of lithium iron phosphate (e.g., LiFePO₄ (also abbreviated as LFP)), lithium iron phosphate-carbon composite, lithium manganese phosphate (e.g., LiMnPO₄), lithium manganese phosphate-carbon composite, lithium iron manganese phosphate, and lithium iron manganese phosphate-carbon composite.

As an example, the positive electrode active material may include at least one of a sodium-transition metal oxide, a polyanionic compound, and a Prussian blue compound:

In some implementations, chemical formula of the sodium-transition metal oxide can satisfy NaₓMO₂, wherein M includes one of more of Ti, V, Mn, Co, Ni, Fe, Zn, V, Zr, Ce, Cr, and Cu, and 0<x≤1. As an example, x in the NaₓMO₂ may be 0.1, 0.2, 0.3, 0.4, 0.5, 0.6, 0.7, 0.8, 0.9, or 1.

In some implementations, the sodium-transition metal oxide may be a doping-modified sodium-transition metal oxide, and the doping modification of the sodium-transition metal oxide may include at least one of sodium-doping modification, oxygen-doping modification, transition metal-doping modification, and surface coating modification.

In some implementations, a foam metal may be used as the positive electrode. The foam metal may be foam nickel, foam copper, foam aluminum, foam alloy, foam carbon, or the like. When the foam metal is used as the positive electrode, the surface of the foam metal may not be provided with a positive electrode active material, and of course, may also be provided with a positive electrode active material. For example, a lithium source material, a potassium metal, or a sodium metal may also fill or/and be deposited in the foam metal, and the lithium source material is a lithium metal and/or a lithium-rich material.

In some implementations, the negative electrode may be a negative electrode plate, and the negative electrode plate may include a negative electrode current collector.

As an example, a metal foil, a foam metal, or a composite current collector may be used as the negative electrode current collector. For example, silver surface-treated aluminum or stainless steel, stainless steel, copper, aluminum, nickel, carbon electrode, carbon, nickel, titanium, or the like may be used as the metal foil. The composite current collector may comprise a polymer material substrate layer and a metal layer. The foam metal may be foam nickel, foam copper, foam aluminum, foam alloy, foam carbon, or the like. The composite current collector may be formed by forming a metal material (copper, copper alloy, nickel, nickel alloy, titanium, titanium alloy, silver and silver alloy, etc.) on a polymer material substrate (such as substrate of polypropylene, polyethylene terephthalate, polybutylene terephthalate, polystyrene, polyethylene, etc.).

In some implementations, the battery cell in the embodiments of the present application may be a negative-electrode-free sodium secondary battery.

A negative-electrode-free sodium secondary battery refers to a battery cell in which a negative electrode active material layer is not actively provided on the negative electrode side during the manufacturing process of the battery cell. For example, a sodium metal or carbonaceous active material layer is not provided at the negative electrode through a coating or deposition process to form a negative electrode active material layer during the manufacturing process of the battery cell. During the first charge, sodium ions gain electrons on the anode side to be deposited on the surface of the current collector to form a sodium metal phase. During discharge, the metallic sodium can be converted into sodium ions and return to the positive electrode, thus achieving cyclic charge and discharge. Compared with other sodium secondary batteries, negative-electrode-free sodium secondary battery cells can achieve higher energy density since they have no negative electrode active material layer.

In some implementations, in order to improve the performance of the battery cell, some functional coating layers, such as a carbonaceous material, a metal oxide, or an alloy, can be provided on the negative electrode side of the negative-electrode-free sodium secondary battery, to improve the conductivity of the negative electrode current collector, and improve the uniformity of deposited sodium metal.

In some implementations, CB value of the negative-electrode-free sodium secondary battery is less than or equal to 0.1.

Specifically, the CB value is capacity per unit area of the negative electrode plate divided by capacity per unit area of the positive electrode plate in the secondary battery. Since a negative-electrode-free battery contains no or only a small amount of functional coating layer, the negative electrode plate has a small capacity per unit area, and the CB value of the secondary battery is less than or equal to 0.1.

In some implementations, material of the positive electrode current collector may be aluminum, and material of the negative electrode current collector may be copper.

In some implementations, the electrode assembly further comprises a separator provided between the positive electrode and the negative electrode.

In some implementations, the separator is a separator film. The embodiments of the present application have no particular limitation on the type of the separator film, and any well-known porous structure separator film with good chemical stability and mechanical stability can be used.

As an example, the main material of the separator film may be selected from at least one of glass fiber, non-woven fabric, polyethylene, polypropylene, polyvinylidene fluoride, and ceramic.

In some implementations, the separator is a solid electrolyte. The solid electrolyte is arranged between the positive electrode and the negative electrode, and functions to transport ions and isolate the positive electrode from the negative electrode.

In some implementations, the battery cell further includes an electrolyte that functions to conduct ions between the positive electrode and the negative electrode. There is no specific limitation on the type of electrolyte in the embodiments of the present application, and the electrolyte can be selected according to the requirement. The electrolyte may be liquid, gel or solid.

In some implementations, the electrode assembly is a wound structure. The positive electrode plate and the negative electrode plate are wound into the wound structure.

In some implementations, the electrode assembly is a stacked structure. As an example, a plurality of positive electrode plates and a plurality of negative electrode plates may be provided respectively, and the plurality of positive electrode plates and the plurality of negative electrode plates are stacked alternately.

As an example, a plurality of positive electrode plates may be provided, and the negative electrode plates are folded to form a plurality of stacked folded segments, with one positive electrode plate sandwiched between adjacent folded segments.

As an example, both the positive electrode plate and the negative electrode plate are folded to form a plurality of stacked folded segments.

As an example, a plurality of separators may be provided and arranged between any adjacent positive electrode plates or negative electrode plates.

For example, the separator may be continuously arranged between any adjacent positive electrode plates or negative electrode plates by folding or winding.

In some implementations, the electrode assembly may be cylindrical, flat or multi-prism-shaped, or the like.

In some implementations, the electrode assembly is provided with tabs that can conduct current out of the electrode assembly. The tabs include a positive tab and a negative tab.

In some implementations, the battery cell may include a shell. The shell is used to encapsulate components such as the electrode assembly and the electrolyte. The shell may be a steel shell, an aluminum shell, a plastic shell (such as polypropylene), a composite metal shell (such as a copper-aluminum composite shell), an aluminum-plastic film, or the like.

As an example, the battery cell may be a cylindrical battery cell, a prismatic battery cell, a pouch cell, or a battery cell in another shape. The prismatic battery cell includes a square-shell battery cell, a blade-shaped battery cell, and a multi-prism battery. For example, the multi-prism battery may be a hexagonal prism battery.

In order to meet different power requirements, the battery in the embodiments of the present application may include a plurality of battery cells. The plurality of battery cells may be connected in series, in parallel, or in parallel-series connection. The parallel-series connection refers to a combination of series connection and parallel connection. Optionally, first, a plurality of battery cells may be connected in series, in parallel, or in parallel-series connection to form a battery module, and then, a plurality of battery modules may be connected in series, in parallel, or in parallel-series connection to form a battery. That is, a plurality of battery cells may directly form a battery, or may first form battery modules, and then the battery modules form a battery. The battery is further arranged in an electrical device to provide electrical energy to the electrical device.

At present, with the increasingly aggravated environmental pollution, the new energy industry has attracted more and more attention. In the new energy industry, the battery technology is an important factor regarding the development thereof. Various design factors, such as energy density, cycle life, and yield rate, need to be considered for the development of the battery technology. The production processes of the battery are relatively complex and include a plurality of processes, such as a mixing process, a coating process, a rolling process, a die-cutting and slitting process, a winding process, a liquid injection process, and a formation process. The coating process is an unneglectable link, and has a crucial influence on the battery performance, wherein the stability, uniformity, dimension, etc. of the coating will all affect the final performance of the battery. Dimension of a coated AB surface includes, e.g., a position dimension, a width dimension, or an AB surface mislocated dimension, all of which have great influences on the performance of the battery. The design of an electrode plate in a battery cell is crucial to the yield rate and service performance of the battery cell.

When continuous production of the electrode in the battery industry is in a preliminary research stage, premixed powder fails to form a uniform film and fails to be continuously rolled after film formation. The powder is rolled and thinned to make a self-supporting film with greatly fluctuating weight, poor consistency, reduced overall device efficiency, small possibility of mass production, great difficulty in pressing premixed fiberized material into uniform thickness after unloading, poor thickness consistency in width direction, and non-uniform transverse thickness of the film formed by wide roller pressing, thereby resulting in a low yield rate of the electrode plate. Moreover, due to the lack of an effective detection device, it is difficult to detect dimensions of coated regions on a first surface and a second surface of the finished electrode plate, thereby resulting in poor dimension consistency of the electrode plate, and prolonged debugging time after occurrence of a quality problem. Therefore, how to improve the yield rate of the electrode plate has become a technical problem to be urgently solved in the art.

In view of this, an embodiment of the present application provides a system for controlling electrode plate detection, applied to an electrode plate coating system, and the electrode plate coating system comprises an unwinding apparatus, a first surface coating apparatus, a first surface drying apparatus, and a winding apparatus arranged in sequence, wherein the system for controlling electrode plate detection comprises: a first detection apparatus arranged between the unwinding apparatus and the first surface coating apparatus for detecting dimension of a to-be-coated region on a first surface of an electrode plate base material outputted from the unwinding apparatus, the first surface being perpendicular to thickness direction of the electrode plate base material. In this way, in an embodiment of the present application, the system for controlling electrode plate detection can adjust dimension of the electrode plate base material or a coating film in the first surface coating apparatus corresponding to the to-be-coated region on the first surface of the electrode plate base material based on a detection result of the first detection apparatus in a timely manner, thereby reducing the risk of electrode plate scrapping caused by untimely detection, improving the coating dimension consistency of the electrode plate, improving the yield rate and quality of the electrode plate, and improving the manufacturing efficiency of the electrode plate.

The electrical device may be, e.g., a vehicle, a mobile phone, a portable device, a laptop, a ship, a spacecraft, an electric toy, or an electric tool. The vehicle may be a fuel vehicle, a gas vehicle, or a new-energy vehicle. The new-energy vehicle may be an all-electric vehicle, a hybrid electric vehicle, an extended-range vehicle, or the like. The spacecraft includes an airplane, a rocket, a space shuttle, a spaceship, and the like. The electric toy includes fixed or mobile electric toys, such as a game machine, an electric vehicle toy, an electric ship toy, an electric airplane toy, and the like. The electric tool includes a metal cutting tool, an electric grinding tool, an electric assembling tool, an electric tool for railways, for example, an electric drill, an electric grinding machine, an electric wrench, an electric screwdriver, an electric hammer, an electric impact drill, a concrete vibrator, and an electric planer.

It should be understood that the technical solutions described in the examples of the present application are not only applicable to the electrical devices described above, but also applicable to all devices using batteries. For the sake of brevity, the following embodiments are described by taking the electrical device being an electric vehicle as an example.

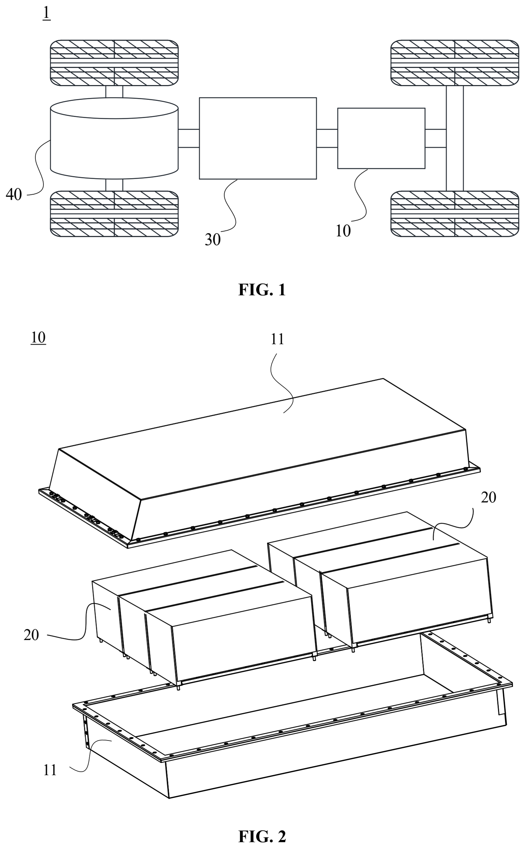

For example, as shown in FIG. 1, a schematic structural diagram of a vehicle 1 according to an embodiment of the present application is shown. The vehicle 1 may be a fuel vehicle, a gas vehicle, or a new energy vehicle, and the new energy vehicle may be an all-electric vehicle, a hybrid vehicle, an extended range electric vehicle, or the like. A motor 40, a controller 30, and a battery 10 may be arranged inside the vehicle 1, and the controller 30 is configured to control the battery 10 to supply power to the motor 40. For example, the battery 10 may be arranged at the bottom or the head or the tail of the vehicle 1. The battery 10 may be configured to supply power to the vehicle 1, for example, the battery 10 may be used as an operating power source of the vehicle 1, which is used for a circuit system of the vehicle 1, for example, for operation power requirements of the vehicle 1 during starting, navigation, and running. In another implementation of the present application, the battery 10 may be used not only as an operating power source of the vehicle 1, but also as a driving power source of the vehicle 1, replacing or partially replacing fuel or natural gas to provide driving power for the vehicle 1.

In order to meet different power consumption needs, the battery 10 in the embodiments of the present application may be a battery cell group or a battery pack. The battery 10 may include at least one battery cell group, and the battery cell group includes a plurality of battery cells. The plurality of battery cells may be electrically connected in series, in parallel, or in parallel-series to form the battery 10, where the parallel-series connection refers to a combination of series connection and parallel connection. The battery 10 may also be referred to as a battery pack. For example, the plurality of battery cells may be connected in series, parallel or parallel-series connection to form battery modules first, and then the plurality of battery modules may be connected in series, parallel or parallel-series connection to form the battery 10. That is, a plurality of battery cells may directly form a battery 10, or may first form battery modules, and then the battery modules form a battery 10.

In some implementations, the battery 10 may include a plurality of battery cells. For example, as shown in FIG. 2, which is a schematic structural diagram of a battery 10 according to an embodiment of the present application. The battery 10 may include a plurality of battery cells 20. The battery 10 may further include a box 11, the box 11 is of a hollow structure inside, and the plurality of battery cells 20 are accommodated in the box 11. For example, the plurality of battery cells 20 are placed in the box 11 after being connected in parallel or in series or in series-parallel combination.

In some implementations, the battery 10 may further include other structures, which will not be described here. For example, the battery 10 may further include a bus component, and the bus component is used to achieve electrical connection between the plurality of battery cells 20, such as parallel connection, series connection or series-parallel connection. Specifically, the bus component may achieve electrical connection between the battery cells 20 by connecting electrode terminals of the battery cells 20. Further, the bus component may be fixed to the electrode terminals of the battery cells 20 by welding. Electric energy of the plurality of battery cells 20 may be further led out through an electrically conductive mechanism penetrating the box. Optionally, the conductive mechanism can also be a bus component.

In the embodiments of the present application, the number of battery cells 20 may be set to any value depending on different power requirements. The plurality of battery cells 20 may be connected in series connection, parallel connection or series-parallel connection to achieve a larger capacity or power. Each battery 10 may include a large quantity of battery cells 20, and therefore, in order to facilitate installation, the battery cells 20 may be arranged in groups, and each group of battery cells 20 forms a battery module. The number of the battery cells 20 included in the battery module is not limited and may be set according to the requirements. The battery 10 may include a plurality of battery modules, and the battery modules may be connected in series, in parallel or in series-parallel combination.

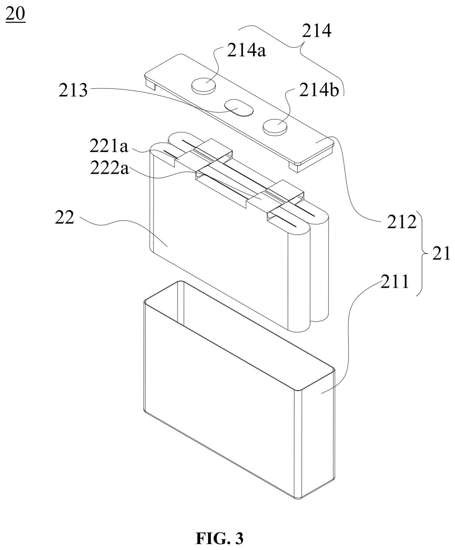

FIG. 3 shows a schematic structural diagram of a battery cell 20 according to an embodiment of the present application. The battery cell 20 comprises one or more electrode assemblies 22, a case 211, and a cover plate 212. The case 211 and the cover plate 212 form a shell or battery box 21. Walls of the case 211 and walls of the cover plate 212 are all referred to as walls of the battery cell 20. For a rectangular solid battery cell 20, the walls of the case 211 include a bottom wall and four side walls. The case 211 is configured based on the shape of one or more electrode assemblies 22 combined together. For example, the case 211 may be a hollow rectangular solid, cube, or cylinder, and one of the faces of the case 211 has an opening to allow the one or more electrode assemblies 22 to be accommodated inside the case 211. For example, when the case 211 is a hollow rectangular solid or cube, one of flat planes of the case 211 serves as the open face, that is, this plane does not have a wall body, allowing communication between the inside and outside of the case 211. When the case 211 may be a hollow cylinder, the end surface of the case 211 is the open face, that is, this end surface does not have a wall body, allowing communication between the inside and outside of the case 211. The cover plate 212 covers the opening and is connected to the case 211 to form a closed cavity for accommodating the electrode assembly 22. The case 211 is filled with an electrolyte, such as an electrolytic solution.

The battery cell 20 may further comprise two electrode terminals 214, and the two electrode terminals 214 may be provided on the cover plate 212. The cover plate 212 is generally in the shape of a flat plate, and the two electrode terminals 214 are fixed to a flat plate surface of the cover plate 212. The two electrode terminals 214 are a positive electrode terminal 214a and a negative electrode terminal 214b, respectively. Each electrode terminal 214 is correspondingly provided with a connecting member, also called a current collecting member, which is located between the cover plate 212 and the electrode assembly 22 and used to electrically connect the electrode assembly 22 to the electrode terminal 214.

As shown in FIG. 3, each electrode assembly 22 has a first tab 221a and a second tab 222a. The first tab 221a and the second tab 222a have opposite polarities. For example, when the first tab 221a is a positive tab, the second tab 222a is a negative tab.

In the battery cell 20, a single or plurality of electrode assemblies 22 may be arranged according to actual usage requirements. As shown in FIG. 3, 2 independent electrode assemblies 22 are arranged in the battery cell 20.

A pressure relief mechanism 213 may further be provided on the battery cell 20. The pressure relief mechanism 213 is used to be actuated to relieve the internal pressure or heat when the internal pressure or temperature of the battery cell 20 reaches a threshold.

The pressure relief mechanism 213 may have various possible pressure relief structures. For example, the pressure relief mechanism 213 may be a temperature-sensitive pressure relief mechanism configured to melt when internal temperature of the battery cell 20 provided with the pressure relief mechanism 213 reaches a threshold; and/or the pressure relief mechanism 213 may be a pressure-sensitive pressure relief mechanism configured to rupture when internal gas pressure of the battery cell 20 provided with the pressure relief mechanism 213 reaches a threshold.

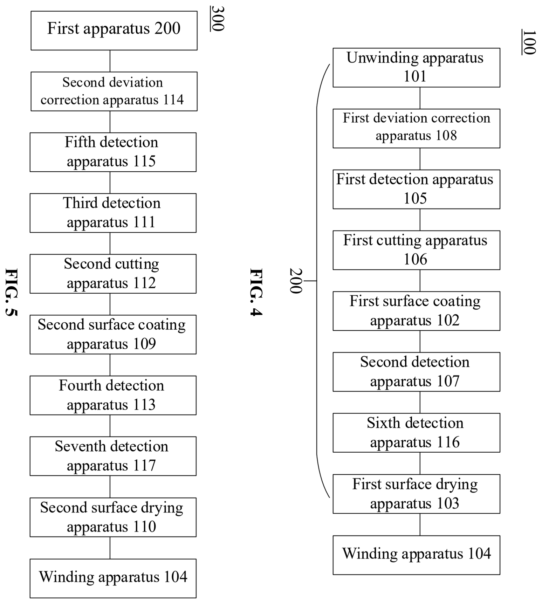

FIG. 4 shows a schematic flow block of a system 100 for controlling electrode plate detection according to an embodiment of the present application.

In some implementations, as shown in FIG. 4, the system 100 for controlling electrode plate detection is applied to an electrode plate coating system, and the electrode plate coating system comprises an unwinding apparatus 101, a first surface coating apparatus 102, a first surface drying apparatus 103, and a winding apparatus 104 arranged in sequence, wherein the system 100 for controlling electrode plate detection comprises: a first detection apparatus 105, the first detection apparatus 105 is arranged between the unwinding apparatus 101 and the first surface coating apparatus 102, the first detection apparatus 105 is used for detecting dimension of a to-be-coated region on a first surface of an electrode plate base material outputted from the unwinding apparatus 101, and the first surface is perpendicular to thickness direction of the electrode plate base material.

It should be understood that the electrode plate base material in an embodiment of the present application may include an aluminum foil, and an electrode plate obtained based on the electrode plate base material is a positive electrode plate. Alternatively, the electrode plate base material may include a copper foil, and an electrode plate obtained based on the electrode plate base material is a negative electrode plate.

It should be further understood that the to-be-coated region on the first surface of the above electrode plate base material is a region that needs to be coated with a slurry. The first surface may be one of surfaces coated with the slurry on the electrode plate base material, and may be a front surface of the electrode plate base material or may be a back surface of the electrode plate base material. Then, a second surface of the electrode plate base material may be a surface on the electrode plate base material opposite to the first surface. For example, if the first surface is the front surface of the electrode plate base material, the second side is the back surface of the electrode plate base material; and if the first surface is the back surface of the electrode plate base material, the second surface is the front surface of the electrode plate base material.

It should be further understood that the dimension of the to-be-coated region on the first surface of the electrode plate base material in an embodiment of the present application may be dimension of the to-be-coated region along width direction of the electrode plate base material. The slurry in an embodiment of the present application may also be referred to as an active material. If the electrode plate base material includes an aluminum foil, the slurry may include, e.g., lithium cobalt oxide, lithium iron phosphate, ternary lithium, or lithium manganate. If the electrode plate base material includes a copper foil, the slurry may include, e.g., carbon or silicon.

It should be further understood that in some implementations, the first detection apparatus 105 may be further configured to detect dimension of a tab forming region on the first surface of the electrode plate base material outputted from the unwinding apparatus 101. The tab forming region is configured to form a tab portion of the electrode plate, and then determine the dimension of the to-be-coated region. The first detection apparatus 105 may be any type of imaging apparatus capable of implementing the above functions. For example, the first detection apparatus 105 may be a charge coupled device (CCD) vision system.

In an embodiment of the present application, the system 100 for controlling electrode plate detection is provided with the first detection apparatus 105, the first detection apparatus 105 is configured to detect the dimension of the to-be-coated region on the first surface of the electrode plate base material outputted from the unwinding apparatus 101, the first surface is perpendicular to the thickness direction of the electrode plate base material, and the first detection apparatus 105 is arranged between the unwinding apparatus 101 and the first surface coating apparatus 102. The system 100 for controlling electrode plate detection can adjust the dimension of the electrode plate base material or the coating film in the first surface coating apparatus 102 corresponding to the to-be-coated region on the first surface of the electrode plate base material based on a detection result of the first detection apparatus 105 in a timely manner, thereby reducing the risk of electrode plate scrapping caused by untimely detection, improving the coating dimension consistency of the electrode plate, improving the yield rate and quality of the electrode plate, and improving the manufacturing efficiency of the electrode plate.

In some implementations, as shown in FIG. 4, the system 100 for controlling electrode plate detection further comprises: a first cutting apparatus 106, the first cutting apparatus 106 is arranged between the first detection apparatus 105 and the first surface coating apparatus 102, and the first cutting apparatus 106 is used for adjusting dimension of a coating film in the first surface coating apparatus 102 corresponding to the to-be-coated region on the first surface of the electrode plate base material based on the detection result of the first detection apparatus 105.

Specifically, in an embodiment of the present application, after the first detection apparatus 105 and the first cutting apparatus 106 are provided in the system 100 for controlling electrode plate detection, the system 100 for controlling electrode plate detection can detect, via the first detection apparatus 105, the dimension of the to-be-coated region on the first surface of the electrode plate base material outputted from the unwinding apparatus 101, compare it with dimension of the coating film outputted from the first surface coating apparatus 102, analyze whether the dimension of the to-be-coated region is within a range of process specifications using a linear regression equation, re-detect, via the first detection apparatus 105 if a closed-loop adjustment amount is 0, the dimension of the to-be-coated region on the first surface of the electrode plate base material outputted from the unwinding apparatus 101 after next closed-loop data acquisition control cycle; invoke, if the closed-loop adjustment amount is not 0, the first cutting apparatus 106 to adjust the dimension of the coating film in the first surface coating apparatus 102 corresponding to the to-be-coated region on the first surface of the electrode plate base material in a timely manner, and re-detect, via the first detection apparatus 105 after the adjustment is completed, the dimension of the to-be-coated region on the first surface of the electrode plate base material outputted from the unwinding apparatus 101 after the next closed-loop data acquisition control cycle, so as to realize closed-loop control.

In this way, in an embodiment of the present application, the system 100 for controlling electrode plate detection is provided with the first cutting apparatus 106, the first cutting apparatus 106 is configured to detect the dimension of the coating film in the first surface coating apparatus 102 corresponding to the to-be-coated region on the first surface of the electrode plate base material based on the detection result of the first detection apparatus 105, and the first cutting apparatus 106 is arranged between the first detection apparatus 105 and the first surface coating apparatus 102. The first cutting apparatus 106 can adjust the dimension of the coating film in the first surface coating apparatus 102 corresponding to the to-be-coated region on the first surface of the electrode plate base material based on the detection result of the first detection apparatus 105 in a timely manner, thereby reducing the risk of electrode plate scrapping caused by untimely detection, improving the coating dimension consistency of the electrode plate, improving the yield rate and quality of the electrode plate, and improving the manufacturing efficiency of the electrode plate.

In some implementations, as shown in FIG. 4, the system for controlling electrode plate detection further comprises a second detection apparatus 107, the second detection apparatus 107 is arranged between the first surface coating apparatus 102 and the first surface drying apparatus 103, and the second detection apparatus 107 is used for detecting dimension of a coated region on a first surface of a first electrode plate outputted from the first surface coating apparatus 102.

It should be understood that the coated region on the first surface of the first electrode plate outputted from the first surface coating apparatus 102 in an embodiment of the present application refers to a region formed after the first surface of the electrode plate base material is coated via the first surface coating apparatus 102. The dimension of the coated region on the first surface of the first electrode plate outputted from the first surface coating apparatus 102 in an embodiment of the present application may be dimension along width direction of the first electrode plate. The second detection apparatus 107 may be any type of imaging apparatus capable of implementing the above functions. For example, the second detection apparatus 107 may be a CCD vision system.

In an embodiment of the present application, the system 100 for controlling electrode plate detection is provided with the second detection apparatus 107, the second detection apparatus 107 is configured to detect the dimension of the coated region on the first surface of the first electrode plate outputted from the first surface coating apparatus 102, and the second detection apparatus 107 is arranged between the first surface coating apparatus 102 and the first surface drying apparatus 103. The system 100 for controlling electrode plate detection can adjust position of the electrode plate base material outputted from the unwinding apparatus 101 based on a detection result of the second detection apparatus 107 in a timely manner, thereby reducing the risk of electrode plate scrapping caused by untimely detection, improving the coating dimension consistency of the electrode plate, improving the yield rate and quality of the electrode plate, and improving the manufacturing efficiency of the electrode plate.

In some implementations, as shown in FIG. 4, the system 100 for controlling electrode plate detection further comprises: a first deviation correction apparatus 108, the first deviation correction apparatus 108 is arranged between the unwinding apparatus 101 and the first surface coating apparatus 102, and the first deviation correction apparatus 108 is used for adjusting the position of the electrode plate base material outputted from the unwinding apparatus 101 based on the detection result of the second detection apparatus 107.

In an embodiment of the present application, the system 100 for controlling electrode plate detection is provided with the first deviation correction apparatus 108, the first deviation correction apparatus 108 is configured to detect the position of the electrode plate base material outputted from the unwinding apparatus 101 based on the detection result of the second detection apparatus 107, and the first deviation correction apparatus 108 is arranged between the unwinding apparatus 101 and the first surface coating apparatus 102. The first deviation correction apparatus 108 can adjust the position of the electrode plate base material outputted from the unwinding apparatus 101 based on the detection result of the second detection apparatus 107 in a timely manner, so that position of the coating film in the first surface coating apparatus 102 corresponding to the to-be-coated region on the first surface of the electrode plate base material outputted from the unwinding apparatus 101 matches position of the to-be-coated region on the first surface, thereby reducing the risk of electrode plate scrapping caused by untimely detection, further improving the coating dimension consistency of the electrode plate, improving the yield rate and quality of the electrode plate, and improving the manufacturing efficiency of the electrode plate.

FIG. 5 shows a schematic flow block of a system 300 for controlling electrode plate detection according to another embodiment of the present application.

It should be understood that in an embodiment of the present application, in order to reduce redundant description, the unwinding apparatus 101, the first deviation correction apparatus 108, the first detection apparatus 105, the first cutting apparatus 106, the first surface coating apparatus 102, the second detection apparatus 107, and the first surface drying apparatus 103 shown in the system 100 for controlling electrode plate detection in FIG. 4 may be replaced with a first apparatus 200.

In some implementations, as shown in FIG. 5, the electrode plate coating system further comprises a second surface coating apparatus 109 and a second surface drying apparatus 110 arranged in sequence between the first surface drying apparatus 103 and the winding apparatus 104, and the system 300 for controlling electrode plate detection may comprise a third detection apparatus 111, the third detection apparatus 111 is arranged between the first surface drying apparatus 103 and the second surface coating apparatus 109, the third detection apparatus 111 is used for detecting dimension of a to-be-coated region on a second surface of the first electrode plate outputted from the first surface drying apparatus 103, and the second surface is perpendicular to thickness direction of the first electrode plate.

It should be understood that the to-be-coated region on the second surface of the above first electrode plate is a region that needs to be coated with a slurry. The second surface may be one of surfaces coated with the slurry on the electrode plate base material, and may be a front surface of the electrode plate base material or may be a back surface of the electrode plate base material. Then, a second surface of the electrode plate base material may be a surface on the electrode plate base material opposite to the first surface. For example, if the first surface is the front surface of the electrode plate base material, the second side is the back surface of the electrode plate base material; and if the first surface is the back surface of the electrode plate base material, the second surface is the front surface of the electrode plate base material.

It should be further understood that the dimension of the to-be-coated region on the second surface of the first electrode plate outputted from the first surface drying apparatus 103 in an embodiment of the present application may be dimension of the to-be-coated region along the width direction of the first electrode plate.

It should be further understood that in some implementations, the third detection apparatus 111 may be further configured to detect dimension of a tab forming region on the second surface of the first electrode plate outputted from the first surface drying apparatus 103, and then determine the dimension of the to-be-coated region. The third detection apparatus 111 may be any type of imaging apparatus capable of implementing the above functions. For example, the third detection apparatus 111 may be a CCD vision system.

In an embodiment of the present application, the system 300 for controlling electrode plate detection is provided with the third detection apparatus 111, the third detection apparatus 111 is configured to detect the dimension of the to-be-coated region on the second surface of the first electrode plate outputted from the first surface drying apparatus 103, and the third detection apparatus 111 is arranged between the first surface coating apparatus 103 and the second surface coating apparatus 109. The system 300 for controlling electrode plate detection can adjust the dimension of the to-be-coated region on the second surface of the first electrode plate outputted from the first surface drying apparatus 103 and dimension of the coating film in the second surface coating apparatus 109 corresponding to the to-be-coated region on the second surface of the first electrode plate outputted from the first surface drying apparatus 103 based on a detection result of the third detection apparatus 111 in a timely manner, thereby reducing the risk of electrode plate scrapping caused by untimely detection, improving the coating dimension consistency of the electrode plate, improving the yield rate and quality of the electrode plate, and improving the manufacturing efficiency of the electrode plate.

In some implementations, as shown in FIG. 5, the system 300 for controlling electrode plate detection further comprises a second cutting apparatus 112, the second cutting apparatus 112 is arranged between the third detection apparatus 111 and the second surface coating apparatus 109, and the second cutting apparatus 112 is used for adjusting dimension of a coating film in the second surface coating apparatus 109 corresponding to the to-be-coated region on the second surface of the first electrode plate outputted from the first surface drying apparatus 103 based on the detection result of the third detection apparatus 111.

Specifically, in an embodiment of the present application, after the third detection apparatus 111 and the second cutting apparatus 112 are provided in the system 300 for controlling electrode plate detection, the system 300 for controlling electrode plate detection can detect, via the third detection apparatus 111, the dimension of the to-be-coated region on the second surface of the first electrode plate outputted from the first surface drying apparatus 103, compare it with dimension of the coating film outputted from the second surface coating apparatus 109, analyze whether the dimension of the to-be-coated region is within a range of process specifications using a linear regression equation, re-detect, via the third detection apparatus 111 if the closed-loop adjustment amount is 0, the dimension of the to-be-coated region on the second surface of the first electrode plate outputted from the first surface drying apparatus 103 after next closed-loop data acquisition control cycle; invoke, if the closed-loop adjustment amount is not 0, the second cutting apparatus 112 to adjust the dimension of the coating film in the second surface coating apparatus 109 corresponding to the to-be-coated region on the second surface of the first electrode plate in a timely manner, and re-detect, via the third detection apparatus 111 after the adjustment is completed, the dimension of the to-be-coated region on the second surface of the first electrode plate outputted from the first surface drying apparatus 103 after the next closed-loop data acquisition control cycle, so as to realize closed-loop control.

In an embodiment of the present application, the system 300 for controlling electrode plate detection is provided with the second cutting apparatus 112, the second cutting apparatus 112 is configured to detect the dimension of the coating film in the second surface coating apparatus 109 corresponding to the to-be-coated region on the second surface of the first electrode plate outputted from the first surface drying apparatus 103 based on the detection result of the third detection apparatus 111, and the second cutting apparatus 112 is arranged between the third detection apparatus 111 and the second surface coating apparatus 109. The second cutting apparatus 112 can adjust the dimension of the coating film in the second surface coating apparatus 109 corresponding to the to-be-coated region on the second surface of the first electrode plate outputted from the first surface drying apparatus 103 based on the detection result of the third detection apparatus 111 in a timely manner, thereby reducing the risk of electrode plate scrapping caused by untimely detection, improving the coating dimension consistency of the electrode plate, improving the yield rate and quality of the electrode plate, and improving the manufacturing efficiency of the electrode plate.

In some implementations, as shown in FIG. 5, the electrode plate coating system further comprises the second surface coating apparatus 109 and the second surface drying apparatus 110 arranged in sequence between the first surface drying apparatus 103 and the winding apparatus 104, and the system 300 for controlling electrode plate detection further comprises: a fourth detection apparatus 113, the fourth detection apparatus 113 is arranged between the second surface coating apparatus 109 and the second surface drying apparatus 110, and the fourth detection apparatus 113 is used for detecting dimension of a coated region on the second surface of the first electrode plate outputted from the second surface coating apparatus 109.

It should be understood that the coated region on the second surface of the first electrode plate outputted from the second surface coating apparatus 109 in an embodiment of the present application refers to a region formed after the second surface of the first electrode plate is coated via the second surface coating apparatus 109. The dimension of the coated region on the second surface of the first electrode plate outputted from the second surface coating apparatus 109 in an embodiment of the present application may be dimension along width direction of the first electrode plate. The fourth detection apparatus 113 may be any type of imaging apparatus capable of implementing the above functions. For example, the fourth detection apparatus 113 may be a CCD vision system.

In an embodiment of the present application, the system 300 for controlling electrode plate detection is provided with the fourth detection apparatus 113, the fourth detection apparatus 113 is configured to detect the dimension of the coated region on the second surface of the first electrode plate outputted from the second surface coating apparatus 109, and the fourth detection apparatus 113 is arranged between the second surface coating apparatus 109 and the second surface drying apparatus 110. The system 300 for controlling electrode plate detection can adjust position of the first electrode plate outputted from the first surface drying apparatus 103 based on a detection result of the fourth detection apparatus 113 in a timely manner, thereby reducing the risk of electrode plate scrapping caused by untimely detection, improving the coating dimension consistency of the electrode plate, improving the yield rate and quality of the electrode plate, and improving the manufacturing efficiency of the electrode plate.

In some implementations, as shown in FIG. 5, the system 300 for controlling electrode plate detection further comprises: a second deviation correction apparatus 114, the second deviation correction apparatus 114 is arranged between the first surface drying apparatus 103 and the second surface coating apparatus 109, and the second deviation correction apparatus 114 is used for adjusting the position of the first electrode plate outputted from the first surface drying apparatus 103 based on the detection result of the fourth detection apparatus 113.

In an embodiment of the present application, the system 300 for controlling electrode plate detection is provided with the second deviation correction apparatus 114, the second deviation correction apparatus 114 is configured to detect the position of the first electrode plate outputted from the first surface drying apparatus 103 based on the detection result of the fourth detection apparatus 113, and the second deviation correction apparatus 114 is arranged between the first surface drying apparatus 103 and the second surface coating apparatus 109. The second deviation correction apparatus 114 can adjust the position of the first electrode plate outputted from the first surface drying apparatus 103 based on the detection result of the fourth detection apparatus 113 in a timely manner, so that position of the coating film in the second surface coating apparatus 109 corresponding to the to-be-coated region on the second surface of the first electrode plate outputted from the first surface drying apparatus 103 matches position of the to-be-coated region on the second surface, thereby reducing the risk of electrode plate scrapping caused by untimely detection, further improving the coating dimension consistency of the electrode plate, improving the yield rate and quality of the electrode plate, and improving the manufacturing efficiency of the electrode plate.

In some implementations, as shown in FIG. 5, the system 300 for controlling electrode plate detection further comprises a fifth detection apparatus 115, the fifth detection apparatus 115 is arranged between the first surface drying apparatus 103 and the second surface coating apparatus 109, the fifth detection apparatus 115 is used for detecting the dimension of the coated region on the first surface of the first electrode plate outputted from the first surface drying apparatus 103; and the second deviation correction apparatus 114 is further configured to adjust the position of the first electrode plate outputted from the first surface drying apparatus 103 based on a detection result of the fifth detection apparatus 115 and the detection result of the fourth detection apparatus 113.

Specifically, in an embodiment of the present application, after the fourth detection apparatus 113, the second deviation correction apparatus 114, and the fifth detection apparatus 115 are provided in the system 300 for controlling electrode plate detection, to detect, via the fourth detection apparatus 113, the dimension of the coated region on the second surface of the first electrode plate outputted from the second surface coating apparatus 109, detect, via the fifth detection apparatus 115, the dimension of the coated region on the first surface of the first electrode plate outputted from the first surface drying apparatus 103, determine a plurality of dislocation values based on the detection result of the fourth detection apparatus 113 and the detection result of the fifth detection apparatus 115, wherein each of the dislocation values may be a difference between a distance from an edge of the coated region on the first surface of the first electrode plate to a reference edge and a distance from an edge of the coated region on the second surface of the first electrode plate to the reference edge, then determine a closed-loop adjustment amount based on the dislocation value and a preset deviation correction amount, re-detect, via the fourth detection apparatus 113 if the closed-loop adjustment amount is 0, the dimension of the coated region on the second surface of the first electrode plate outputted from the second surface coating apparatus 109 after next closed-loop data acquisition control cycle, detect, via the fifth detection apparatus 115, the dimension of the coated region on the first surface of the first electrode plate outputted from the first surface coating apparatus 103; invoke, if the closed-loop adjustment amount is not 0, the second deviation correction apparatus 114 to adjust the position of the first electrode plate outputted from the first surface drying apparatus 103, so that the dislocation value between the coated regions on the first surface and the second surface of the first electrode plate outputted from the second surface coating apparatus 109 is within a specification range, re-detect, via the fourth detection apparatus 113 after the adjustment is completed, the dimension of the coated region on the second surface of the first electrode plate outputted from the second surface coating apparatus 109 after the next closed-loop data acquisition control cycle, and detect, via the fifth detection apparatus 115, the dimension of the coated region on the first surface of the first electrode outputted from the first surface drying apparatus 103, so as to realize closed-loop control.

In an embodiment of the present application, the system 300 for controlling electrode plate detection is provided with the fifth detection apparatus 115, the fifth detection apparatus 115 is configured to detect the dimension of the coated region on the first surface of the first electrode plate outputted from the first surface drying apparatus 103, and the fifth detection apparatus 115 is arranged between the first surface coating apparatus 103 and the second surface coating apparatus 109. The system 300 for controlling electrode plate detection can adjust, via the second deviation correction apparatus 114, the position of the first electrode plate outputted from the first surface drying apparatus 103 based on the detection result of the fifth detection apparatus 115 and the detection result of the fourth detection apparatus 113, so that the dislocation value between the coated regions on the first surface and the second surface of the first electrode plate outputted from the second surface coating apparatus 109 can fall within the specification range, thereby reducing the risk of electrode plate scrapping caused by untimely detection, further improving the coating dimension consistency of the electrode plate, improving the yield rate and quality of the electrode plate, and improving the manufacturing efficiency of the electrode plate.

In some implementations, as shown in FIG. 4, the system 100 for controlling electrode plate detection further comprises a sixth detection apparatus 116, the sixth detection apparatus 116 is arranged between the first surface coating apparatus 102 and the first surface drying apparatus 103, the sixth detection apparatus 116 is used for detecting weight and/or thickness of the first electrode plate outputted from the first surface coating apparatus 102; the first surface coating apparatus 102 comprises at least two calender rollers, and the first surface coating apparatus 102 is configured to adjust a distance between any two of the at least two calender rollers and a rolling pressure based on a detection result of the sixth detection apparatus 116.

It should be understood that the sixth detection apparatus 116 in an embodiment of the present application may be an automated measurement system using an automated device and system, and is configured to measure, continuously or at a high speed via a sensor or a weighing apparatus, the weight and/or thickness of the first electrode plate outputted from the first surface coating apparatus 102, to improve the detection efficiency and accuracy. As an example, the sixth detection apparatus 116 includes, but is not limited to, a laser thickness measuring device, and a β-ray or X-ray weight measuring device.

It should also be understood that, in an embodiment of the present application, after the system 100 for controlling electrode plate detection adjusts the distance between any two of the at least two calender rollers in the first surface coating apparatus 102 and the rolling pressure based on the sixth detection apparatus 116, the dimension of the coated region on the first surface of the first electrode plate outputted from the first surface coating apparatus 102 will be affected to a certain extent. Subsequently, the system 100 for controlling electrode plate detection can further control the first cutting apparatus 106 and the first deviation correction apparatus 108 via the first detection apparatus 105 and the second detection apparatus 107 provided in the system 100 for controlling electrode plate detection, so as to balance between the weight consistency and dimension consistency of the first electrode plate outputted from the first coating apparatus 102, thereby improving the yield rate and quality of the electrode plate, and improving the manufacturing efficiency of the electrode plate.

In an embodiment of the present application, the system 100 for controlling electrode plate detection is provided with the sixth detection apparatus 116, the sixth detection apparatus 116 is configured to detect the weight and/or thickness of the first electrode plate outputted from the first surface coating apparatus 102, and the sixth detection apparatus 116 is arranged between the first surface coating apparatus 102 and the first surface drying apparatus 103. The system 100 for controlling electrode plate detection can adjust the distance between any two of the at least two calender rollers in the first surface coating apparatus 102 and the rolling pressure based on the detection result of the sixth detection apparatus 116, to improve the weight consistency of the first electrode plate outputted from the first surface coating apparatus 102, thereby improving the yield rate and quality of the electrode plate, and improving the manufacturing efficiency of the electrode plate.

In some implementations, as shown in FIG. 5, the system 300 for controlling electrode plate detection further comprises: a seventh detection apparatus 117, the seventh detection apparatus 117 is arranged between the second surface coating apparatus 109 and the second surface drying apparatus 110, the seventh detection apparatus 117 is used for detecting weight and/or thickness of the first electrode plate outputted from the second surface coating apparatus 109; the second surface coating apparatus comprises at least two calender rollers, and the second surface coating apparatus 109 is configured to adjust the distance between any two of the at least two calender rollers and the rolling pressure based on a detection result of the seventh detection apparatus 117.

It should be understood that the seventh detection apparatus 117 in an embodiment of the present application may be an automated measurement system using an automated device and system, and is configured to measure, continuously or at a high speed via a sensor or a weighing apparatus, the weight and/or thickness of the first electrode plate outputted from the first surface coating apparatus 109, to improve the detection efficiency and accuracy. As an example, the seventh detection apparatus 117 includes, but is not limited to, a laser thickness measuring device, and a β-ray or X-ray weight measuring device.

It should also be understood that, in an embodiment of the present application, after the system 300 for controlling electrode plate detection adjusts the distance between any two of the at least two calender rollers in the second surface coating apparatus 109 and the rolling pressure based on the seventh detection apparatus 117, the dimension of the coated region on the second surface of the first electrode plate outputted from the second surface coating apparatus 109 will be affected to a certain extent. Subsequently, the system 300 for controlling electrode plate detection can further control the second cutting apparatus 112 and the second deviation correction apparatus 114 via the third detection apparatus 111 and the fourth detection apparatus 113 provided in the system 300 for controlling electrode plate detection, so as to balance between the weight consistency and dimension consistency of the first electrode plate outputted from the second coating apparatus 109, thereby improving the yield rate and quality of the electrode plate, and improving the manufacturing efficiency of the electrode plate.

In an embodiment of the present application, the system 300 for controlling electrode plate detection is provided with the seventh detection apparatus 117, the seventh detection apparatus 117 is configured to detect the weight and/or thickness of the first electrode plate outputted from the second surface coating apparatus 109, and the seventh detection apparatus 117 is arranged between the second surface coating apparatus 109 and the second surface drying apparatus 110. The system 300 for controlling electrode plate detection can adjust the distance between any two of the at least two calender rollers in the second surface coating apparatus 109 and the rolling pressure based on the detection result of the seventh detection apparatus 117, to improve the weight consistency of the first electrode plate outputted from the second surface coating apparatus 109, thereby improving the yield rate and quality of the electrode plate, and improving the manufacturing efficiency of the electrode plate.

In some implementations in an embodiment of the present application, at least one support roller may be provided on one side or both sides of the at least two calender rollers in the first surface coating apparatus 102 and/or the second surface coating apparatus 109, and axis of the at least one support roller and axes of the at least two calender rollers are on a same plane and parallel to each other. As an example, a support roller may be provided on each of left and right sides of three continuously arranged calender rollers in the second surface coating apparatus 109, that is, the three continuously horizontally arranged calender rollers are arranged between the two support rollers, and axes of the support rollers on the left and right sides and axes of the three calender rollers are on a same plane and parallel to each other.

In an embodiment of the present application, when the at least two calender rollers in the first surface coating apparatus 102 and/or the second surface coating apparatus 109 rotate, the at least one support roller can rotate following the at least two calender rollers, to serve for supporting the at least two calender rollers, reduce the deformation of the calender rollers in the thickness direction of the electrode plate, and improve thickness consistency of the electrode plate, thereby improving the yield rate and quality of the electrode plate, and improving the manufacturing efficiency of the electrode plate.

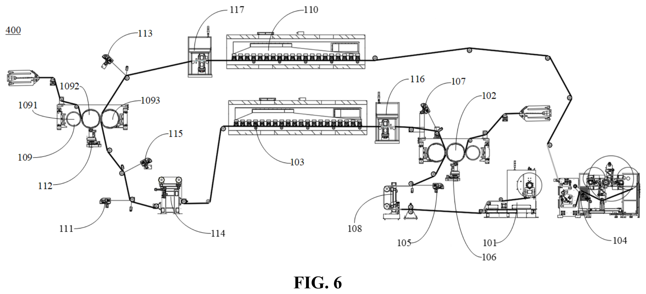

In some implementations, as shown in FIG. 6, the second surface coating apparatus 109 may comprise a thinning roller 1091, a transfer roller 1092, and a composite roller 1093 arranged in sequence. When a to-be-coated film is thinned, there will be a reaction force on the calender rollers, thereby resulting in roller deflection and deformation, affecting the thinning effect of the film, and reducing the yield rate of the electrode plate. In some implementations, as shown in FIG. 6, diameter of the thinning roller 1091 can be reduced to reduce the roller pressure, thereby improving the deflection and deformation of the thinning roller 1091, reducing the impact on the uniformity of the film, and improving the yield rate and quality of the electrode plate. In some other implementations, at least one support roller may be further provided on one side of the thinning roller 1091 away from the transfer roller 1092 and the composite roller 1093, to support the thinning roller 1091, and effectively reduce deformation of the thinning roller 1091 during movement, thereby improving the thickness consistency of the electrode plate, improving the yield rate and quality of the electrode plate, and improving the manufacturing efficiency of the electrode plate.

FIG. 6 shows a schematic flow block of a system 400 for controlling electrode plate detection according to still another embodiment of the present application. In some implementations, as shown in FIG. 6, the system 400 for controlling electrode plate detection comprises an unwinding apparatus 101, a first deviation correction apparatus 108, a first detection apparatus 105, a first cutting apparatus 106, a first surface coating apparatus 102, a second detection apparatus 107, a sixth detection apparatus 116, a first surface drying apparatus 103, a second deviation correction apparatus 114, a fifth detection apparatus 115, a third detection apparatus 111, a second cutting apparatus 112, a second surface coating apparatus 109, a fourth detection apparatus 113, a seventh detection apparatus 117, a second surface drying apparatus 110, and a winding apparatus 104 arranged in sequence.

While the present application has been described with reference to the above embodiments, various modifications may be made and components thereof may be replaced with equivalents without departing from the scope of the present application. In particular, the technical features mentioned in the various examples can be combined in any manner as long as there is no structural conflict. The present application is not limited to the particular embodiments disclosed herein, but rather includes all technical solutions falling within the scope of the claims.

## Claims

1. A system for controlling electrode plate detection, applied to an electrode plate coating system, the electrode plate coating system comprising an unwinding apparatus, a first surface coating apparatus, a first surface drying apparatus, and a winding apparatus arranged in sequence, wherein the system for controlling electrode plate detection comprises:
a first detection apparatus arranged between the unwinding apparatus and the first surface coating apparatus for detecting dimension of a to-be-coated region on a first surface of an electrode plate base material outputted from the unwinding apparatus, the first surface being perpendicular to thickness direction of the electrode plate base material.

2. The system for controlling electrode plate detection according to claim 1, wherein the system for controlling electrode plate detection further comprises:
a first cutting apparatus arranged between the first detection apparatus and the first surface coating apparatus for adjusting dimension of a coating film in the first surface coating apparatus corresponding to the to-be-coated region on the first surface of the electrode plate base material outputted from the unwinding apparatus based on a detection result of the first detection apparatus.

3. The system for controlling electrode plate detection according to claim 1 or 2, wherein the system for controlling electrode plate detection further comprises:
a second detection apparatus arranged between the first surface coating apparatus and the first surface drying apparatus for detecting dimension of a coated region on a first surface of a first electrode plate outputted from the first surface coating apparatus.

4. The system for controlling electrode plate detection according to claim 3, wherein the system for controlling electrode plate detection further comprises:
a first deviation correction apparatus arranged between the unwinding apparatus and the first surface coating apparatus for adjusting position of the electrode plate base material outputted from the unwinding apparatus based on a detection result of the second detection apparatus.

5. The system for controlling electrode plate detection according to any one of claims 1 to 4, wherein the electrode plate coating system further comprises a second surface coating apparatus and a second surface drying apparatus arranged in sequence between the first surface drying apparatus and the winding apparatus, and the system for controlling electrode plate detection further comprises:
a third detection apparatus arranged between the first surface drying apparatus and the second surface coating apparatus for detecting dimension of a to-be-coated region on a second surface of the first electrode plate outputted from the first surface drying apparatus, the second surface being perpendicular to thickness direction of the first electrode plate.

6. The system for controlling electrode plate detection according to claim 5, wherein the system for controlling electrode plate detection further comprises:
a second cutting apparatus arranged between the third detection apparatus and the second surface coating apparatus for adjusting dimension of a coating film in the second surface coating apparatus corresponding to the to-be-coated region on the second surface of the first electrode plate outputted from the first surface drying apparatus based on a detection result of the third detection apparatus.

7. The system for controlling electrode plate detection according to any one of claims 1 to 6, wherein the electrode plate coating system further comprises the second surface coating apparatus and the second surface drying apparatus arranged in sequence between the first surface drying apparatus and the winding apparatus, and the system for controlling electrode plate detection further comprises:
a fourth detection apparatus arranged between the second surface coating apparatus and the second surface drying apparatus for detecting dimension of a coated region on the second surface of the first electrode plate outputted from the second surface coating apparatus.

8. The system for controlling electrode plate detection according to claim 7, wherein the system for controlling electrode plate detection further comprises:
a second deviation correction apparatus arranged between the first surface drying apparatus and the second surface coating apparatus for adjusting position of the first electrode plate outputted from the first surface drying apparatus based on a detection result of the fourth detection apparatus.

9. The system for controlling electrode plate detection according to claim 8, wherein the system for controlling electrode plate detection further comprises:
a fifth detection apparatus arranged between the first surface drying apparatus and the second surface coating apparatus for detecting the dimension of the coated region on the first surface of the first electrode plate outputted from the first surface drying apparatus; and
the second deviation correction apparatus is further configured to adjust the position of the first electrode plate outputted from the first surface drying apparatus based on a detection result of the fifth detection apparatus and the detection result of the fourth detection apparatus.

10. The system for controlling electrode plate detection according to any one of claims 1 to 9, wherein the system for controlling electrode plate detection further comprises:
a sixth detection apparatus arranged between the first surface coating apparatus and the first surface drying apparatus for detecting weight and/or thickness of the first electrode plate outputted from the first surface coating apparatus;
the first surface coating apparatus comprises at least two calender rollers, and the first surface coating apparatus is configured to adjust a distance between any two of the at least two calender rollers and a rolling pressure based on a detection result of the sixth detection apparatus.

11. The system for controlling electrode plate detection according to any one of claims 5 to 10, wherein the system for controlling electrode plate detection further comprises:
a seventh detection apparatus arranged between the second surface coating apparatus and the second surface drying apparatus for detecting weight and/or thickness of the first electrode plate outputted from the second surface coating apparatus;
the second surface coating apparatus comprises at least two calender rollers, and the second surface coating apparatus is configured to adjust a distance between any two of the at least two calender rollers and a rolling pressure based on a detection result of the seventh detection apparatus.

12. The system for controlling electrode plate detection according to any one of claims 5 to 11, wherein at least one support roller may be provided on one side or both sides of the at least two calender rollers in the first surface coating apparatus and/or the second surface coating apparatus, and axis of the at least one support roller and axes of the at least two calender rollers are on a same plane and parallel to each other.
